# EUROPÄISCHE PATENTSCHRIFT

(11) **EP 0 353 483 B1**
(45) Veröffentlichungstag und Bekanntmachung des Hinweises auf die Patenterteilung: **21.04.1993**
(21) Anmeldenummer: 89112296.2
(22) Anmeldetag: 05.07.1989
(51) Int. Cl.: G21C 17/06, G21C 19/10

(54) **Vorrichtung zur Prüfung der Gängigkeit von Steuerelementen in Kernkraftwerken**
Device for checking the mobility of control elements in nuclear power stations
Dispositif pour vérifier la mobilité des éléments de contrôle dans les centrales nucléaires

(30) Priorität: 18.07.1988 DE 3824331
(43) Veröffentlichungstag der Anmeldung: 07.02.1990
(73) Patentinhaber: SIEMENS AKTIENGESELLSCHAFT, 80333 München (DE)
(72) Erfinder: Wandam, Peter, D-8551 Hausen (DE); Köhler, Siegfried, Dipl.-Ing., D-8522 Herzogenaurach (DE)

(56) Entgegenhaltungen:
- EP-A- 0 098 781
- EP-A- 0 142 383
- GB-A- 2 060 238
- US-A- 3 990 591
- US-A- 4 482 520
- US-A- 4 699 750

## Beschreibung

Die Erfindung bezieht sich auf eine Vorrichtung zur Prüfung der Gängigkeit eines Steuerelementen in einem Kernkraftwerk.

Zum Prüfen der Gängigkeit von Steuerelementen in Kernkraftwerken ist es bekannt, mit einem fest im Gebäude des Kernkraftwerkes installierten Kran die Antriebsstange eines Steuerelementes zu erfassen und durch Heben und Senken die Prüfung der Steuerelemente durchzuführen. Dabei wird von einer Federwaage, die zwischen dem Kranhaken und der Antriebsstange angeordnet ist, das Gewicht abgelesen und in ein Protokoll eingetragen. Geprüft wird, ob das Steuerelement mit der Antriebsstange gekuppelt ist und ob eine Leichtgängigkeit vorhanden ist. Zur Durchführung dieser Prüfung ist umfangreiches Personal u.a. für die Kranbedienung, zur Positionierung und zum Ablesen der Federwaage erforderlich. Darüber hinaus ist während der Prüfungszeit der Kran für andere Aufgaben nicht verfügbar. Tritt ein Verzug während der Prüfung auf, so wird der im Terminplan vorgesehene Einsatz des Krans für nachfallende Aufgaben verzögert. Der Fachmann spricht dabei vom kritischen Pfad, auf dem die Prüfung liegt.

Aus US-A-4 699 750 ist eine Vorrichtung zur Prüfung der bäugigkeit von Steuerelementen bekannt, bei der durch Verwendung einer speziellen Anordnung der Einsatz des Hauptbrückenkranes nicht erforderlich ist.

Der Erfindung liegt die Aufgabe zugrunde, eine einfache Vorrichtung zu schaffen, mit der die Prüfung der Gängigkeit für Kernreaktorsteuerelemente durchgeführt und verbessert werden kann.

Diese Aufgabe wird erfindungsgemäß durch eine Vorrichtung gelöst, bestehend aus:
- einem an einer Hilfsbrücke aufgehängten und über einem Kernbehälter verfahrbaren Fahrwerk,
- einem mit einem ersten Ende an dem Fahrwerk befestigten Gestänge, dessen zweites Ende in den Kernbehälter hineinragt,
- einer an dem zweiten Ende des Gestänges angebrachten fernbedienbaren Greifvorrichtung zum Greifen einer Antriebsstange,
- einer an dem Gestänge und/oder an dem Fahrwerk angeordneten Hubeinrichtung zum Heben und Senken der ergriffenen Antriebsstange,
- einer Kraftmeßeinrichtung zur Erfassung von Daten, die am Gestänge angeordnet ist und dazu dient, die von dem Steuerelement hervorgerufene Belastung zu erfassen und die über eine Datenleitung an Einrichtungen zum Anzeigen und Protokollieren der erfaßten Daten angeschlossen ist,
   und
- einer Steuereinrichtung, die über Leitungen mit der Hubeinrichtung und der Greifeinrichtung verbunden ist.

Mit diesen wenigen Mitteln steht eine einfache Vorrichtung für die Prüfung der Gängigkeit der Steuerelemente zur Verfügung. Die Prüfung ist unabhängig von der Verfügbarkeit eines Kranes und liegt somit nicht mehr auf dem kritischen Pfad des Terminplanes. Weiterhin kann der Personaleinsatz erheblich reduziert werden, da zumindest für die Kranbedienung sowie für die Protokollierung der Ergebnisse kein Personal mehr benötigt wird. Desweiteren ist die Vorrichtung durch ihre kompakte sowie einfache Bauweise leicht transportabel und daher in verschiedensten Reaktortypen einsetzbar.

Es ist günstig, wenn ein Geländer der Hilfsbrücke als Fahrschiene für das Fahrwerk dient und/oder das Fahrwerk einen Elektromotor aufweist, der als Antrieb dient. Hierdurch wird das Montieren und das Verfahren der Vorrichtung wesentlich erleichtert. Zum einen braucht keine zusätzliche Fahrschiene auf der Hilfsbrücke vorgesehen werden, zum anderen entfällt ein händisches Verfahren der Vorrichtung.

Weitere vorteilhafte Ausgestaltungen der Erfindung sind in den weiteren Ansprüchen angegeben.

Die erfindungsgemäße Vorrichtung wird anhand der Zeichnungen im folgendem beispielshalber erläutert. Es zeigen:
- FIG 1: eine erfindungsgemäße Vorrichtung,
- FIG 2: ein weiteres Ausführungsbeispiel der erfindungsgemäßen Anordnung,
- FIG 3: eine Detailzeichnung der Greifvorrichtung,
- FIG 4: eine weitere Ausführung der Greifvorrichtung.

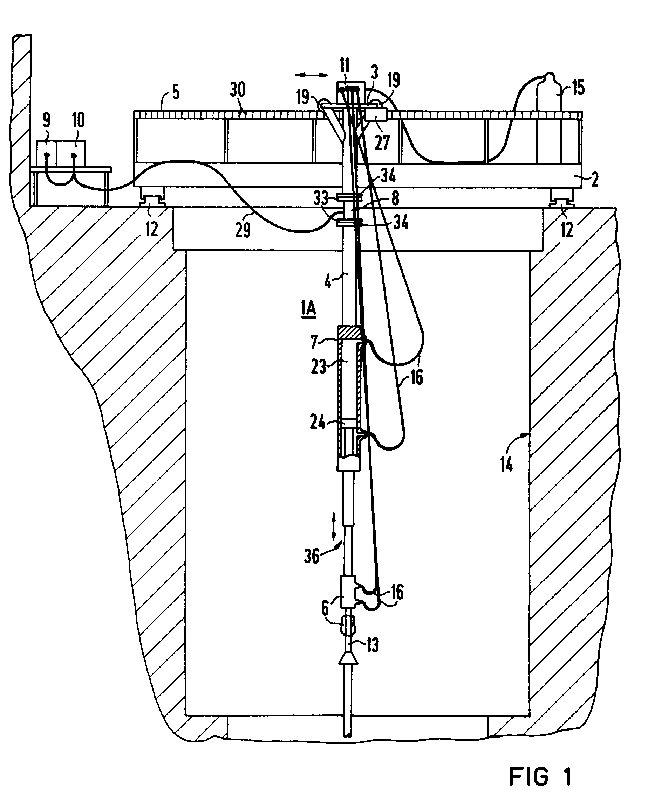

FIG 1 zeigt eine erfindungsgemäße Vorrichtung 1A, bei der ein nach Art eines Y-Trägers ausgebildetes Fahrwerk 3 an einer Hilfsbrücke 2 über einem Kernbehälter 14 aufgehängt und über diesen auf Rädern 19 verfahrbar ist. Dabei dient vorteilhafterweise ein Geländer 5 der Hilfsbrücke 2 als Fahrschiene für das Fahrwerk 3. Ein zusätzliches Montieren einer speziellen Fahrschiene entfällt daher. An dem Fahrwerk 3 ist ein Gestänge 4 mit einem Ende befestigt, dessen zweites Ende in den Kernbehälter 14 hineinragt. An diesem zweiten Ende des Gestänges 4 ist eine fernbedienbare Greifvorrichtung 6 zum Greifen einer Antriebsstange 13 eines Steuerelementes angebracht. Mittels einer an dem Gestänge 4 angeordneten Hubeinrichtung 7 wird die ergriffene Antriebsstange 13 angehoben bzw. abgesenkt.

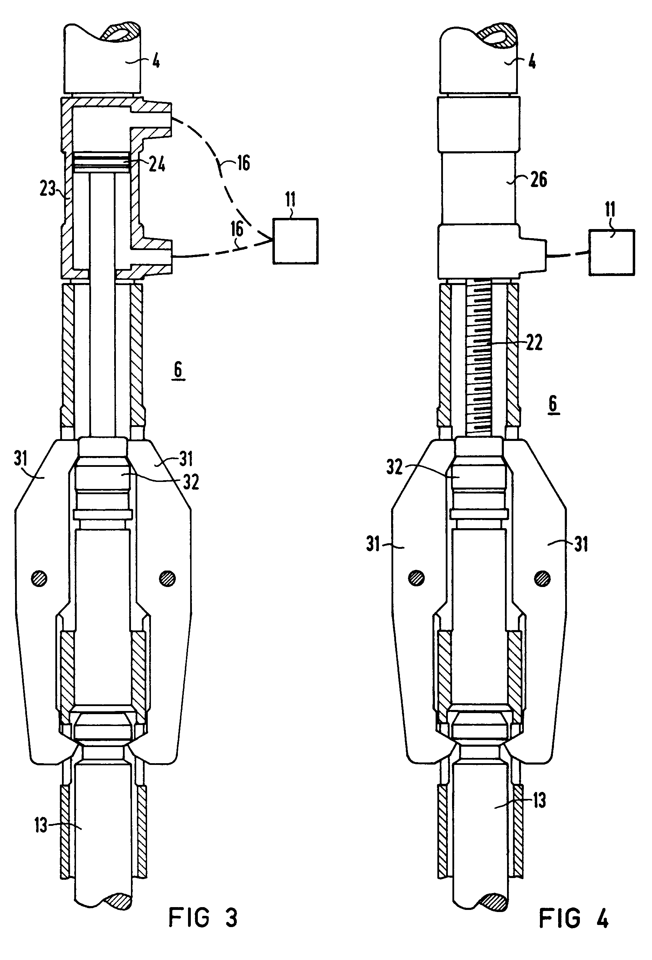

Dabei ist es günstig, daß die Hubeinrichtung 7 einen in einem Zylinder 23 geführten Kolben 24 als Antrieb aufweist. Der Kolben 24 ist einfachheitshalber als doppelseitiger Kolben ausgeführt. Diese einfache pneumatische Ausführung hat den Vorteil, daß sie mit überall zur Verfügung stehendem Druckgas betrieben werden kann. Zweckmäßigerweise ist die Greifvorrichtung 6 mit einem pneumatischen Antrieb ausgeführt (siehe hierzu auch FIG 3).

Die Hubeinrichtung 7 und die Greifvorrichtung 6 sind über Steuerleitungen 16 mit einer Steuereinrichtung 11 verbunden.

Über diese Steuereinrichtung 11 können die Hubeinrichtung 7 und die Greifeinrichtung 6 betätigt werden. Dabei erfolgt eine Versorgung mit Druckmittel aus einem Reservoir 15. Unterhalb des Fahrwerkes 3 ist am Gestänges 4 eine an sich bekannte Kraftmeßeinrichtung 8 angeordnet, die dazu dient, die von dem Steuerelement 13 an der Vorrichtung 1A hervorgerufene Belastung zu erfassen. Die Kraftmeßeinrichtung 8 besitzt an ihren zwei Enden Flansche 33, wobei die Flansche 33 mit den Flanschen 34 des Gestänges durch Schrauben befestigt sind. Die Kraftmeßeinrichtung 8 kann beispielsweise auf Basis piezoelektrischer Kraftmessung beruhen oder mit Hilfe von Dehnungsmeßstreifen realisiert sein. Geeignet sind solche Meßverfahren, die ein elektrisches oder optisches Signal abgeben. Die Kraftmeßeinrichtung 8 ist über eine Datenleitung 29 an eine Anzeigeeinrichtung 9 und eine Protokolliereinrichtung 10 zum Anzeigen und Protokollieren der von der Kraftmeßeinrichtung 8 erfaßten Daten angeschlossen. Für das Bedienpersonal entfällt daher das Ablesen und Protokollieren der aufgenommenen Meßdaten. Diese Daten werden von der Protokollier einrichtung 10 kontinuierlich aufgezeichnet.

Die Vorrichtung 1A wird über den Steuerelementen durch einfaches Verschieben des Fahrwerks 3 auf der Hilfsbrücke 2 sowie durch Verfahren der Hilfsbrücke 2 auf Schienen 12 positioniert.

Dabei ist es von besonderem Vorteil, daß die Vorrichtung 1A Mittel zur Positionserfassung 27 aufweist, die mit der Steuereinrichtung 11 zur halb- oder vollautomatischen Positionierung und/oder zur Fernsteuerung des Prüfvorganges verbunden sind. Mit dem Mittel zur Positionserfassung 27 ist es möglich eine Kennung 30 an der Hilfsbrücke 2 auszuwerten, die wiederum der Steuereinrichtung 11 zugeführt wird. In einer rechnergesteuerten Ausführung der Steuereinrichtung 11 ist mittel eines geeigneten Rechnerprogramms eine halb- oder auch vollautomatische Positionierung der Vorrichtung 1A möglich. So kann beispielsweise auch bei einer halbautomatischen Ausführung durch Fernsteuerung der einfache Befehl zum Positionswechsel und so zum Anfahren eines nächsten Steuerelementes gegeben werden.

Zweckmäßigerweise ist das Gestänge 4 auf unterschiedliche Längen einstellbar, so daß es für verschiedene Arbeitstiefen einstellbar ist. Dabei ist das Gestänge 4 als Teleskopgestänge 36 ausgebildet. Dadurch wird eine stufenlose Einstellbarkeit der Länge erreicht.

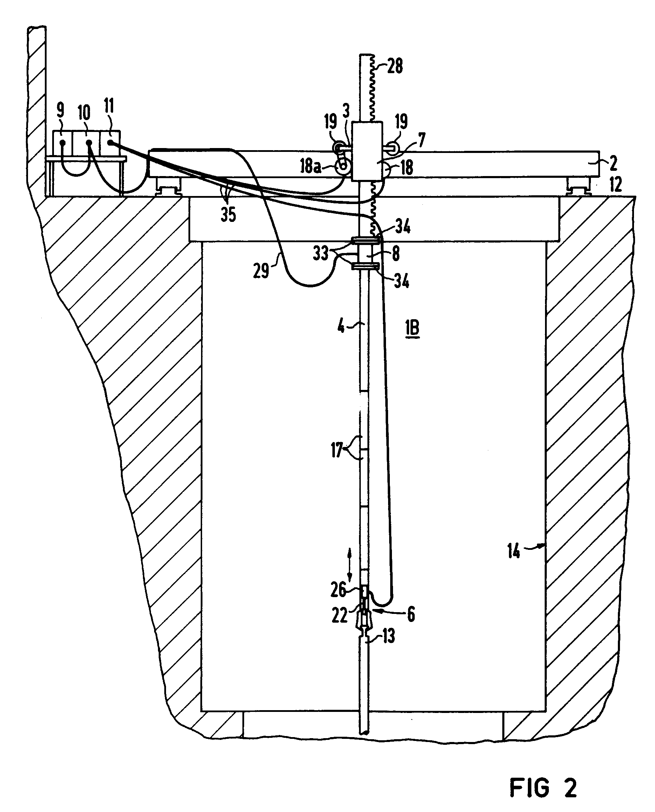

In FIG 2 ist ein weiteres Ausführungsbeispiel der Vorrichtung 1B gezeigt. Das Einstellen der Arbeitstiefe erfolgt bei dieser Ausführung durch Einfügen bzw. Herausnehmen von Teilgestängen 17, die in die Länge des Gestänges einpaßbar sind. Diese Teilgestänge 17 können auch eine unterschiedliche Länge aufweisen. Dadurch wird ein universeller Einsatz für verschiedene Arbeitstiefen erreicht. Auch kann die Vorrichtung 1B auf diese Weise in seiner Länge auf ein günstiges Transportmaß gekürzt werden.

Die Greifvorrichtung 6 weist in dieser Ausführungsform einen Elektromotor 26 mit einer Spindel 22 als Antrieb auf (siehe hierzu auch FIG 4). Auch die Hubeinrichtung 7 weist einen als Antrieb dienenden Elektromotor 18 auf, der über ein Getriebe auf eine Zahnung 28 des Gestänges 4 einwirkt. Diese Ausführungsform kann zweckmäßigerweise angewendet werden, wenn keinerlei Druckluftversorgung vorhanden ist. Der gesamte Antrieb kann so auf elektrische Weise ausgeführt werden.

Dieses Ausführungsbeispiel zeichnet sich auch dadurch aus, daß die Hubeinrichtung 7 direkt an dem Fahrwerk 3 angeordnet ist und beim Heben oder Senken das gesamte Gestänge 4 bewegt wird. Dies ist auch für die Montage vorteilhaft. Die Teilgestänge 17 des Gestänges 4 können unterhalb des Fahrwerks 7 einzeln angesetzt und verschraubt werden, so daß da Gestänge 4 stückweise aufgebaut und eingefahren wird.

Günstig ist auch, daß das Fahrwerk 3 einen als Antrieb dienenden Elektromotor 18a aufweist. Dadurch eignet sich diese Ausführung besonders für eine Fernbedienung oder auch eine vollautomatische Positionierung.

FIG 3 zeigt eine pneumatische Ausführung der Greifvorrichtung 6. An dem Gestänge 4 ist eine doppelwirkende Zylinderanordnung angebracht. Sie besteht aus dem Zylinder 23, der über Leitungen 16 an eine Steuereinrichtung 11 angeschlossen ist und einen darin angeordneten doppelseitigen Kolen 24. Über seine Kolbenstange werden die Klinken 31 zum Erfassen der Antriebsstange 13 betätigt.

FIG 4 zeigt eine elektrische Ausführung der Greifvorrichtung 6. Dabei dient als Antrieb ein Elektromotor 26, der über eine Spindel 22 einen Kolben 32 bewegt, so daß die Klinken 31 betätigt werden.

Der Prüfvorgang wird folgendermaßen durchgeführt:
Zuerst wird die Vorrichtung 1 über dem ausgewählten Steuerelement positioniert. Das Gestänge 4 wird dann mittels der Hubeinrichtung 7 abgesenkt, bis die Antriebsstange 13 des Steuerelementes in die Greifvorrichtung 6 eingeführt ist. Nach dem Erfassen der Antriebsstange 13 des Steuerelementes wird die Antriebsstange 13 bis zu einer obersten Position angehoben und dann wieder abgesenkt. Die Belastung an der Vorrichtung 1 wird von der Protokolliereinrichtung 10 aufgezeichnet. Mittels dieser Aufzeichnungen kann die korrekte Funktion des Steuerelementes festgestellt werden. Dieser Prüfvorgang wird für alle Steuerelemente durchgeführt.

## Patentansprüche

1. Vorrichtung (1A) zur Prüfung der Gängigkeit eines Steuerelementes in einem Kernkraftwerk, mit:
- einem an einer Hilfsbrücke (2) aufgehängten und über einem Kernbehälter (14) verfahrbaren Fahrwerk (3),
- einem mit einem ersten Ende an dem Fahrwerk (3) befestigten Gestänge (4), dessen zweites Ende in den Kernbehälter (14) hineinragt,
- einer an dem zweiten Ende des Gestänges (4) angebrachten fernbedienbaren Greifvorrichtung (6) zum Greifen einer Antriebsstange (13),
- einer an dem Gestänge (4) und/oder an dem Fahrwerk (3) angeordneten Hubeinrichtung (7) zum Heben und Senken der ergriffenen Antriebsstange (13),
- einer Kraftmeßeinrichtung (8) zur Erfassung von Daten, die am Gestänge (4) angeordnet ist und dazu dient, die von dem Steuerelement hervorgerufene Belastung zu erfassen und die über eine Datenleitung (29) an Einrichtungen (9, 10) zum Anzeigen und Protokollieren der erfaßten Daten angeschlossen ist,
und
- einer Steuereinrichtung (11), die über Leitungen (16) mit der Hubeinrichtung (7) und der Greifeinrichtung (6) verbunden ist.

2. Vorrichtung nach Anspruch 1, die Mittel (27) zur Positionserfassung aufweist, die mit der Steuereinrichtung (11) zur halb- oder vollautomatischen Positionierung und/oder zur Fernsteuerung des Prüfvorganges verbunden sind.

3. Vorrichtung nach einem der vorhergehenden Ansprüche, bei dem das Gestänge (4) auf unterschiedliche Längen durch Ausbildung als Teleskopgestänge oder durch Aneinandersetzen von Teilgestängen einstellbar ist.

4. Vorrichtung nach einem der vorhergehenden Ansprüche, bei dem ein Geländer (5) der Hilfsbrücke (2) als Fahrschiene für das Fahrwerk (3) dient und/oder das Fahrwerk (3) einen Elektromotor (18) aufweist, der als Antrieb dient.

5. Vorrichtung nach einem der vorhergehenden Ansprüche, bei dem die Hubeinrichtung (7) einen Elektromotor (18a) aufweist, der über ein Getriebe auf eine Zahnung des Gestänges (4) einwirkt und als Antrieb dient.

6. Vorrichtung nach Anspruch 1 bis 4, bei dem die Hubeinrichtung (7) einen in einem Zylinder (23) geführten Kolben (24) als Antrieb aufweist.

7. Vorrichtung nach einem der vorhergehenden Ansprüche, bei dem die Greifvorrichtung (6) durch einen in einem Zylinder (23) geführten Kolben (24) betätigbar ist.

8. Vorrichtung nach einem der Ansprüche 1 bis 6, bei dem die Greifvorrichtung (6) einen Elektromotor (26) mit einer Spindel (22) als Antrieb aufweist.

## Claims

1. Device (1A) for checking the mobility of a control element in a nuclear power station, having:
- a travelling mechanism (3) suspended on an auxiliary bridge (2) and portable over a nuclear container (14),
- a support (4) fastened by a first end to the travelling mechanism (3), the second end of the support projecting into the nuclear container (14),
- a remotely-controllable gripping device (6) fitted to the second end of the support (4) for gripping a drive rod (13),
- a lifting device (7) arranged on the support (4) and/or on the travelling mechanism (3) for lifting and lowering the gripped drive rod (13),
- a force-measuring device (8) for detecting data, which is arranged on the support (4) and serves to detect the strain generated in the control element and which is attached by way of a data line (29) to devices (9, 10) for displaying and recording the detected data,
and
- a control device (11) which is connected by way of lines (16) to the lifting device (7) and the gripping device (6).

2. Device according to claim 1, having means (27) for position detection, which are connected to the control device (11) for the semi-automatic or fully automatic positioning and/or remote control of the checking procedure.

3. Device according to one of the preceding claims, wherein the support (4) can be adjusted to different lengths through formation as a telescopic support or through the joining-together of partial supports.

4. Device according to one of the preceding claims, wherein a railing (5) of the auxiliary bridge (2) serves as a travelling rail for the travelling mechanism (3) and/or the travelling mechanism (3) has an electric motor (18a) which serves as drive.

5. Device according to one of the preceding claims, wherein the lifting device (7) has an electric motor (18) which acts by way of a gearing on a toothing of the support (4) and serves as drive.

6. Device according to claims 1 to 4, wherein the lifting device (7) has a piston (24) guided in a cylinder (23) as drive.

7. Device according to one of the preceding claims, wherein the gripping device (6) can be actuated by a piston (24) guided in a cylinder (23).

8. Device according to one of claims 1 to 6, wherein the gripping device (6) has an electric motor (26) with a spindle (22) as drive.

## Revendications

1. Installation de vérification de l'état de marche d'un élément de commande d'une centrale nucléaire, comportant:
- un chariot (3) suspendu à un pont auxiliaire (2) et mobile au-dessus d'une cuve de coeur (14),
- une tringle (4) dont la première extrémité est fixée au chariot (3) et dont la seconde extrémité pénètre dans la cuve du coeur (14),
- un dispositif de préhension (6) pouvant être télécommandé, monté à la seconde extrémité de la tringle (4) et destiné à la préhension d'une barre d'entraînement (13),
- un dispositif de levage (7) monté sur la tringle (4) et/ou sur le chariot (3) et destiné à soulever et à abaisser la barre d'entraînement (13) qui a été appréhendée,
- un dispositif de mesure des forces (8) destiné à saisir des données, qui est monté sur la tringle (4), qui sert à détecter la charge provoquée par l'élément de commande et qui est relié, par une ligne de données (29), à des dispositifs (9, 10) d'affichage et d'impression des données saisies,
et
- un dispositif de commande (11), qui est relié au dispositif de levage (7) et au dispositif de préhension (6) par des lignes (16).

2. Installation suivant la revendication 1, qui comporte des moyens (27) de détection de la position, lesquels sont reliés au dispositif de commande (11) pour obtenir une mise en position semi-automatique ou entièrement automatique et/ou pour télécommander le processus de vérification.

3. Installation suivant l'une des revendications précédentes, dans laquelle la tringle (4) est réglable à des longueurs différentes, en étant agencée en tringle télescopique ou par emmanchement de parties de tringles.

4. Installation suivant l'une des revendications précédentes, dans laquelle un garde-fou (5) du pont auxiliaire (2) sert de rail de guidage du chariot (3) et/ou le chariot (3) comporte un moteur électrique (18a) qui sert d'entraînement.

5. Installation suivant l'une des revendications précédentes, dans laquelle le dispositif de levage (7) comporte un moteur électrique (18) qui agit par l'intermédiaire d'un engrenage sur une denture de la tringle (4) et qui sert d'entraînement.

6. Installation suivant l'une des revendications 1 à 4, dans laquelle le dispositif de levage (7) comporte, comme entraînement, un piston (24) guidé dans le cylindre (23).

7. Installation suivant l'une des revendications précédentes, dans laquelle le dispositif de préhension (6) peut être manoeuvré par un piston (24) guidé dans le cylindre (23).

8. Installation suivant l'une des revendications 1 à 6, dans laquelle le dispositif de préhension (6) comporte, comme entraînement, un moteur électrique (26) ayant une broche (22).
